# FASCICULE DE BREVET EUROPEEN

(11) **EP 3 149 281 B1**
(45) Date de publication et mention de la délivrance du brevet: **06.07.2022**
(21) Numéro de dépôt: 15732795.8
(22) Date de dépôt: 22.05.2015
(51) Int. Cl.: F01D 5/18, B22C 9/10

(54) **AUBE DE TURBINE COMPRENANT UN CONDUIT CENTRAL DE REFROIDISSEMENT ET DEUX CAVITÉS LATÉRALES JOINTIVES EN AVAL DU CONDUIT CENTRAL**
TURBINENSCHAUFEL MIT EINEM ZENTRALEN KÜHLKANAL UND ZWEI SEITLICHEN HOHLRÄUMEN DIE STROMABWÄRTS DES ZENTRALEN KANALS ZUSAMMENGEFÜHRT SIND
TURBINE BLADE HAVING A CENTRAL COOLING CONDUIT AND TWO LATERAL CAVITIES MERGED DOWNSTREAM OF THE CENTRAL CONDUIT

(30) Priorité: 28.05.2014 FR 1454865
(43) Date de publication de la demande: 05.04.2017
(73) Titulaire: SAFRAN AIRCRAFT ENGINES, 75015 Paris (FR)
(72) Inventeur: DUJOL, Charlotte, Marie, 77550 Moissy Cramayel Cedex (FR); ENEAU, Patrice, 77550 Moissy-Cramayel Cedex (FR)
(74) Mandataire: Brevalex
(86) Numéro de dépôt international: PCT/FR2015/051373
(87) Numéro de publication internationale: WO 2015/181482

(56) Documents cités:
- EP-A1- 2 189 230
- EP-A2- 1 065 343
- EP-A2- 1 655 452
- EP-A2- 2 119 873
- JP-A- S61 279 702
- US-A- 3 373 970
- US-A- 4 252 501
- US-A1- 2008 080 979
- US-A1- 2012 269 647

## Description

### DOMAINE TECHNIQUE

L'invention concerne une aube de turbine d'une turbomachine, telle qu'un turboréacteur à double flux ou un turbopropulseur à double flux, par exemple d'un moteur d'aéronef.

### ÉTAT DE LA TECHNIQUE ANTÉRIEURE

Dans un tel moteur, l'air extérieur est admis dans une manche d'entrée pour traverser une soufflante comportant une série de pales rotatives avant de se scinder en un flux primaire central et un flux secondaire entourant le flux primaire.

Le flux primaire est ensuite compressé avant d'arriver dans une chambre de combustion, après quoi il se détend en traversant un ensemble de turbines avant d'être évacué vers l'arrière en générant de la poussée. Le flux secondaire est quant à lui propulsé directement vers l'arrière par la soufflante pour générer une poussée complémentaire.

La détente dans les turbines, qui permet d'entraîner le compresseur et la soufflante, a lieu à température élevée du fait qu'elle se produit immédiatement après la combustion. Cette turbine est ainsi conçue et dimensionnée pour fonctionner dans des conditions sévères de température, de pression et de débit de fluide.

Chaque turbine comporte une succession d'étages comportant chacun une série d'aubes orientées radialement et régulièrement espacées autour d'un arbre de rotation du moteur. Cet arbre central porte les éléments rotatifs de la turbine ainsi que les éléments rotatifs du compresseur et de la soufflante.

Concrètement, les aubes de la turbine qui sont soumises aux conditions les plus sévères sont celles des premiers étages de détente de cette turbine, à savoir les étages les plus proches de la zone de combustion et qui sont communément appelés étages haute pression.

D'une manière générale, les besoins accrus en performances et l'évolution des réglementations conduisent à concevoir des moteurs de plus faible taille fonctionnant dans des environnements de plus en plus sévères. Ceci implique d'accroître la tenue et la performance des aubes de turbine haute pression en particulier en ce qui concerne leur tenue en température.

Néanmoins, les améliorations existantes en ce qui concerne les matériaux et les revêtements de ces aubes ne suffisent pas pour leur permettre de supporter les températures élevées pouvant être atteintes par le flux en aval de la chambre de combustion. Cette situation conduit à reconsidérer le refroidissement de ces aubes pour l'améliorer afin qu'elles puissent supporter ces nouvelles conditions de fonctionnement.

Ce refroidissement est assuré en faisant circuler à l'intérieur de ces aubes de l'air frais qui est prélevé dans le turboréacteur en amont de la combustion. Cet air est admis en pied d'aube, pour cheminer le long d'un circuit interne de l'aube afin de la refroidir, et il est évacué hors de l'aube par des perçages traversant la paroi de cette aube et répartis sur cette paroi. Ces perçages servent à évacuer l'air de refroidissement, mais ils créent aussi à la surface externe de l'aube un film d'air plus froid que l'air issu de la combustion, ce qui contribue aussi à limiter la température de l'aube.

Pour accroître l'efficacité de refroidissement, les régions intérieures de l'aube dans lesquelles circule l'air de refroidissement comportent des artifices, c'est-à-dire des reliefs internes qui perturbent l'écoulement fluide de l'air de refroidissement, pour accroître le transfert thermique depuis la paroi de l'aube vers cet air de refroidissement circulant dans les conduits internes de l'aube.

Ces architectures de refroidissement sont pénalisées par le fait que la longueur du circuit interne de l'aube donne lieu à un air trop fortement réchauffé lorsqu'il atteint la fin de ce circuit, de sorte que son efficacité de refroidissement est limitée dans les régions de fin de parcours où l'on cherche au contraire à obtenir une efficacité de refroidissement accrue.

Le but de l'invention est de proposer une structure d'aube permettant d'améliorer l'efficacité de refroidissement de cette aube.

US 4,252,501 décrit une aube connue de l'état de la technique.

### EXPOSÉ DE L'INVENTION

L'invention vise à résoudre au moins partiellement les problèmes rencontrés dans les solutions de l'art antérieur.

A cet égard, l'invention a pour objet une aube de turbine d'une turbomachine telle qu'un turbopropulseur ou un turboréacteur, selon la revendication 1.

Des caractéristiques préférentielles de l'invention sont divulguées dans les revendications dépendantes.

Les deux cavités latérales forment préférablement avec la région de jonction une cavité unique enveloppant le conduit central sur la majorité de la hauteur du conduit central.

La configuration interne de l'aube, par laquelle les cavités latérales internes communiquent entre elles, en étant réunies en aval du conduit central, permet une meilleure isolation thermique de l'air de refroidissement circulant dans le conduit central.

L'invention peut comporter de manière facultative une ou plusieurs des caractéristiques suivantes combinées entre elles ou non.

Avantageusement, la région de jonction s'étend sur toute la hauteur d'au moins l'une de la première et de la deuxième cavité latérale selon la direction d'envergure.

La région de jonction s'étend préférablement sur toute la hauteur du conduit central selon la direction d'envergure.

Selon une particularité de réalisation, la région de jonction présente, selon au moins un plan de section orthogonal à la direction d'envergure une forme de U ouvert vers l'amont.

Selon une forme de réalisation avantageuse, le faîte du U présente une épaisseur sensiblement constante selon une direction longitudinale d'élongation de la pale du bord d'attaque au bord de fuite.

Selon une autre forme de réalisation avantageuse, le conduit central a des surfaces internes lisses. Les cavités latérales comprennent de préférence des promoteurs de turbulence et/ou des déflecteurs, destinés à favoriser la turbulence de l'air à l'intérieur de la pale et/ou à assurer une répartition plus homogène de l'air de refroidissement.

Selon une autre particularité de réalisation, l'aube comprend plusieurs cavités latérales internes distinctes longeant l'intrados et/ou plusieurs cavités latérales distinctes longeant l'extrados. Dans ce cas, la région de jonction est de préférence située dans une zone aval de la pluralité de cavités latérales.

L'invention porte également sur un ensemble de moulage configuré pour fabriquer une aube telle que définie ci-dessus, comprenant au moins une empreinte et un ensemble de noyaux destinés à la formation du conduit central interne, des cavités latérales, de la rampe amont, de la rampe aval, des passages et des fentes.

L'invention se rapporte aussi à une turbine de turbomachine comprenant une aube telle que définie ci-dessus.

Enfin, l'invention concerne une turbomachine comprenant une turbine telle que définie ci-dessus. La turbine est alors de préférence une turbine haute pression dans laquelle les aubes sont soumises à des températures plus élevées que dans une turbine basse pression de turbomachine.

### BRÈVE DESCRIPTION DES DESSINS

La présente invention sera mieux comprise à la lecture de la description d'exemples de réalisation, donnés à titre purement indicatif et nullement limitatif, en faisant référence aux dessins annexés sur lesquels :
- La figure 1 est une vue schématique d'un turboréacteur à double flux en coupe longitudinale ;
- la figure 2 est une vue schématique en perspective d'une aube de turbine selon un premier mode de réalisation du turboréacteur montré sur la figure 1 ;
- la figure 3 est une vue en perspective représentant les parties internes creuses d'une aube de turbine selon le premier mode de réalisation de l'invention ;
- la figure 4 est une vue en coupe schématique partielle de l'aube du premier mode de réalisation selon une coupe orthogonale à la direction d'envergure.

### EXPOSÉ DÉTAILLÉ DE MODES DE RÉALISATION PARTICULIERS

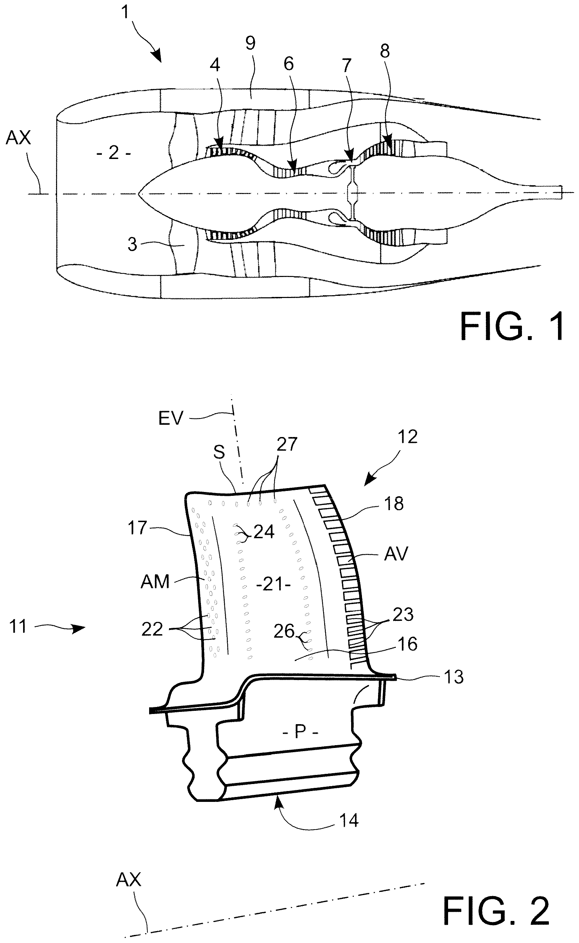

Comme visible sur la figure 1, une partie avant d'un turboréacteur à double flux 1 comporte une manche d'entrée 2 dans laquelle est admis l'air avant d'être aspiré par les pales d'une soufflante 3. Après avoir passé la région de la soufflante, l'air se divise en un flux primaire central et un flux secondaire qui entoure le flux primaire.

Le flux d'air primaire traverse ensuite un premier compresseur 4 situé immédiatement après la soufflante 3 alors que le flux secondaire est propulsé vers l'arrière pour directement générer une poussée additionnelle en étant soufflé autour du flux primaire.

Le flux primaire traverse ensuite un second étage de compression 6, avant d'atteindre une chambre 7 où a lieu sa combustion, après injection et vaporisation d'un carburant. Après combustion, ce flux primaire se détend dans une turbine haute pression 8 puis dans une turbine basse pression non représentée pour entraîner en rotation les étages de compression et la soufflante, avant d'être expulsé vers l'arrière du moteur pour générer une poussée.

La turbomachine 1 et ses composants ont une forme de révolution autour d'un axe longitudinal AX. Elle comporte notamment un carter externe 9 ayant lui aussi une forme de révolution et s'étendant depuis l'avant du moteur où il délimite la manche d'entrée d'air, jusqu'à la partie arrière où il délimite le conduit par lequel les flux primaire et secondaire sont évacués, l'avant et l'arrière étant à considérer par rapport à la direction d'avancement de l'aéronef équipé de ce turboréacteur. Ce carter 9 supporte les composants rotatifs situés au centre du moteur et qui comprennent un arbre rotatif portant les pales de la soufflante ainsi que les étages de compression et la turbine avec leurs aubes.

Une telle aube, qui est repérée par 11 sur la figure 2, comprend un pied P par lequel elle est fixée à un corps rotatif non représenté, appelé disque de turbine, et une pale 12 portée par ce pied P et constituant la partie aérodynamique de cette aube. Comme visible sur la figure 2, l'aube 11 comporte entre le pied P et la pale 12 une région intermédiaire 13 appelée plateforme.

L'ensemble que forme le pied P et la pale 12 est une pièce unique monobloc creuse issue de fonderie et comportant des conduits internes par lesquels circule de l'air de refroidissement. Ces conduits internes non visibles dans la figure 2 comportent des bouches d'admission s'ouvrant en face inférieure 14 du pied P et par lesquelles ces conduits sont alimentés en air frais. La paroi creuse de la pale 12 comporte des trous traversants et des fentes par lesquels est évacué l'air de refroidissement.

La pale 12 a une forme gauche vrillée ayant un contour sensiblement rectangulaire, se rapprochant d'un parallélépipède. Elle comprend une base 16 par laquelle elle est raccordée au pied P et qui s'étend à peu près parallèlement à l'axe de rotation AX. Elle comprend aussi un bord d'attaque 17 orienté radialement par rapport à l'axe AX et situé au niveau de l'amont AM de l'aube, c'est-à-dire la région avant de cette aube, par rapport à la direction d'avancement du moteur qu'elle équipe en service. Cette aube comporte aussi, un bord de fuite 18 orienté à peu près parallèlement au bord d'attaque 17 en étant espacé de celui-ci le long de l'axe AX pour être situé au niveau de la région aval AV ou arrière de l'aube. Elle comprend encore un sommet S à peu près parallèle à la base 16 et espacé de celle-ci selon une direction radiale par rapport à l'axe AX.

Les deux parois principales de cette aube sont sa paroi d'intrados 21, qui est la paroi visible dans la figure 2, et sa paroi d'extrados qui est la paroi opposée espacée de la paroi d'intrados, et qui n'est pas visible dans la figure 2 du fait qu'elle est masquée par la paroi d'intrados 21. Les parois d'intrados et d'extrados sont réunies au niveau du bord d'attaque 17, au niveau du bord de fuite 18 et également dans la région du sommet S de cette aube. Ces parois sont espacées l'une de l'autre au niveau de la base 16 pour permettre l'admission d'air de refroidissement dans la région interne de la pale.

Le bord d'attaque 17 a une forme bombée et il est pourvu d'une série de trous de refroidissements 22 traversant la paroi de l'aube dans cette région. Le bord de fuite 18 a quant à lui une forme effilée, et il comporte une série de fentes de refroidissement 23. Ces fentes 23 sont des fentes de faibles longueurs espacées les unes des autres en étant situées dans le prolongement les unes des autres, pour constituer un ensemble qui longe l'extrémité du bord de fuite 18, chaque fente 23 traversant la paroi d'intrados 21.

En fonctionnement, le fluide dans lequel est située cette aube 11 se déplace par rapport à celle-ci depuis le bord d'attaque 17 vers le bord de fuite 18 en longeant l'intrados 21 et l'extrados. La paroi d'intrados 21 qui est soumise à un échauffement significatif en fonctionnement, comporte une séries de trous 24 sensiblement parallèlement au bord d'attaque 17 en étant situés en aval de ce bord d'attaque, et une autre série de trous 26 sensiblement parallèlement au bord de fuite 18 en étant situés en amont de ce bord de fuite 18 et des fentes 23 qu'il comporte. Les séries de trous 24 et 26 s'étendent ainsi l'une et l'autre selon la direction d'envergure EV de la pale, qui est la direction radiale par rapport à l'axe AX.

La région du sommet S de l'aube 11 présente, contrairement au bord d'attaque 17 et au bord de fuite 18, une certaine épaisseur, et il a par ailleurs une forme délimitant une portion creuse dite en baignoire.

Plus concrètement, ce sommet S présente une paroi de fermeture qui raccorde les parois d'intrados et d'extrados, cette paroi de fermeture ayant une orientation qui est globalement perpendiculaire aux parois d'intrados et d'extrados et parallèle à l'axe AX, ce qui correspond à une orientation perpendiculaire à la direction d'envergure EV. Cette paroi de fermeture qui n'est pas visible sur la figure 2 est située en retrait vers l'axe AX par rapport au bord libre de la paroi d'intrados et au bord libre de la paroi d'extrados, de sorte qu'elle constitue, conjointement avec ces bords une portion creuse ouverte en direction opposée à l'axe AX.

Une série de trous supplémentaires 27 traversant la paroi d'intrados est prévue le long du sommet S pour assurer un refroidissement significatif de ce sommet de pale qui subit des contraintes importantes du fait qu'il constitue la partie ayant la vitesse la plus élevée par rapport au fluide.

La série de trous 27 s'étend parallèlement à la paroi de fermeture, et la pale comporte, complémentairement, des trous non visibles sur la figure 2 qui traversent la paroi de fermeture pour déboucher dans la portion creuse appelée baignoire qui est au sommet de la pale.

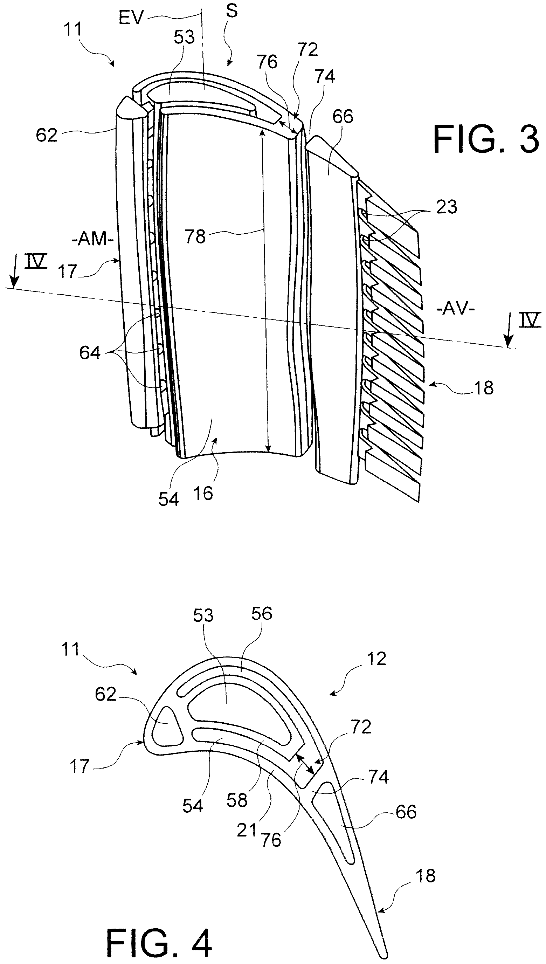

Comme indiqué plus haut, une telle aube est une pièce monobloc creuse. Elle est fabriquée par moulage d'un matériau métallique de type titane ou autre, en utilisant un ensemble de noyaux pour délimiter les conduits internes de sa portion creuse ainsi que des portions de tiges pour former ses trous traversants. Les noyaux, tiges et autres sont retirés une fois que l'opération de moulage est terminée, typiquement avec un processus d'attaque chimique à même de dissoudre ces éléments sans altérer le matériau moulé. En particulier, l'ensemble de moulage de la figure 3 comprend un noyau central destiné à la fabrication d'un conduit central interne de l'aube, et un noyau périphérique monobloc destiné à la fabrication de cavités latérales d'intrados et d'extrados.

L'ensemble de moulage représenté de manière schématique partielle à la figure 3 sert à fabriquer l'aube 11 représentée en coupe à la figure 4. A ce titre, la figure 3 montre des régions internes de l'aube 11 qui y est représentée par les formes des noyaux permettant de fabriquer cette aube 11. Autrement dit, les formes qui sont en relief sur la figure 3 constituent des représentations des formes creuses de l'aube représentée à la figure 4.

Dans le mode de réalisation représenté à la figure 3 et à la figure 4, le bord d'attaque 17 et dans une moindre mesure le sommet S sont alimentés en air de refroidissement par un conduit central interne 53 qui s'étend depuis le pied P de l'aube jusqu'au sommet S de cette aube. Le conduit central 53 collecte, au niveau du pied P et à travers le pied P, de l'air de refroidissement pour le faire circuler dans la pale 12. L'air refroidissant la région creuse du bord d'attaque 17 est ensuite évacué par les trous traversants 22 formés dans la paroi externe de la pale 12.

L'aube 11 de la figure 3 comprend également une première cavité latérale 54 longeant la paroi d'intrados, et une seconde cavité latérale 56 longeant l'extrados. Ces deux cavités latérales 54, 56 isolent thermiquement le conduit central 53 des parois d'intrados et d'extrados qui sont réchauffées par les écoulements de gaz entourant la pale 12. L'air qui est fourni au bord d'attaque 17 de l'aube 11 et dans une moindre mesure au sommet S par le conduit central 53 est maintenu frais durant son cheminement dans ce conduit, grâce à ces cavités latérales qui jouent le rôle d'écran thermique entre le conduit central 53 plus froid et les parois d'intrados 21 et d'extrados.

A cet effet, le conduit central 53 est séparé physiquement des cavités latérales 54, 56, entre lesquelles il s'étend. Le conduit central 53 est alors alimenté en air de refroidissement séparément des cavités latérales. Afin de minimiser les échauffements et les pertes de charge à l'intérieur de l'aube 11 de la figure 3, le conduit central 53 a des surfaces internes lisses.

Comme visible dans la figure 3, la première cavité latérale 54 présente une faible épaisseur, et elle s'étend depuis le pied P jusqu'à la région du sommet S en ayant un contour généralement rectangulaire. Cette première cavité latérale 54 présente une largeur suffisante pour masquer ou couvrir le conduit central 53.

De manière analogue, la deuxième cavité latérale 56 a aussi une faible épaisseur, et elle s'étend depuis le pied P jusqu'à la région du sommet S. Cette deuxième cavité latérale 56 présente un contour généralement rectangulaire, ayant une largeur suffisante pour masquer ou couvrir le conduit central du côté de l'extrados.

Le refroidissement de l'aube 11 est encore optimisé en minimisant les pertes de charges dans le conduit central interne 53 pour y réduire les échanges thermiques, et en prévoyant au contraire des promoteurs de turbulences dans les cavités latérales 54, 56. Chaque cavité latérale 54, 56 est avantageusement pourvue de déflecteurs, de perturbateurs et/ou de pontets pour créer des turbulences dans la circulation de l'air de refroidissement.

Les cavités latérales 54, 56 ont ainsi une efficacité accrue en tant qu'écran thermique du fait qu'elles absorbent la chaleur issue des parois externes qu'elles longent. L'air circulant dans le conduit central 53 est soumis à peu de pertes de charges, afin de circuler rapidement et se réchauffer le moins possible. Les deux cavités latérales 54 et 56 entourent le conduit central 53 au moins dans la partie arrière du conduit central 53. Elles enveloppent ainsi le conduit central interne 53 sur trois quarts de sa circonférence environ. Les cavités latérales 54, 56 sont réunies en partie arrière ou aval de l'aube 11 dans une région de jonction 72 où elles communiquent entre elles. La région de jonction 72 présente, selon au moins un plan de section orthogonal à la direction d'envergure EV, une forme de U ouvert vers l'amont. Le faîte du U présente une épaisseur 76 sensiblement constante selon la direction longitudinale AX d'élongation de la pale 12 du bord d'attaque 17 au bord de fuite 18. La région de jonction 72 a une forme de U ouvert vers l'amont et une épaisseur 76 environ constante, sur toute la hauteur 78 de la région de jonction 72 selon la direction d'envergure EV.

La région de jonction 72 permet au conduit central 53 de fournir au bord d'attaque 17 qu'il alimente en air de refroidissement de l'air encore plus frais, ce qui limite les détériorations prématurées de la pale 12. Les deux cavités 54, 56 avec la région de jonction 72 constituent une cavité unique enveloppant le conduit central 53 sur la majorité de la surface externe de la paroi 58 du conduit central interne 53. La région de jonction 72 s'étend sur la majorité de la hauteur 78 de ce conduit central 53. En pratique, et comme visible sur la figure 3, la hauteur 78 ou longueur de la région de jonction 72 selon la direction d'envergure EV correspond à la hauteur ou longueur de la première cavité latérale 54 selon la direction d'envergure EV. La hauteur 78 de la région de jonction 72 correspond également à la hauteur ou longueur du conduit central interne 53 selon la direction d'envergure EV.

L'alimentation en air de refroidissement des cavités latérales 54, 56 peut être réalisée de manière séparée par deux conduits d'alimentation débouchant séparément dans le pied d'aube, les cavités latérales étant alors réunies uniquement dans la région de la pale 12. Il est possible de prévoir un unique canal d'alimentation des deux cavités latérales ayant en section en forme de U dans un plan de section transversal à la direction d'envergure EV.

L'aval de la paroi d'extrados est dépourvu de trous traversant, du fait notamment de la trop faible pression de l'air dans cette région.

Le bord d'attaque 17 de l'aube est refroidi par une rampe amont de refroidissement 62 qui s'étend depuis la base 16 de la pale jusqu'au sommet S. Le bord d'attaque 17 n'est pas alimenté de manière directe par le pied P mais par l'intermédiaire du conduit central 53, de manière calibrée.

Cette alimentation calibrée est assurée par des passages calibrés 64 régulièrement espacés le long de la direction d'envergure EV de l'aube et qui relient chacun le conduit central 53 à la rampe amont 62. Chaque passage 64 a un diamètre calibré, c'est-à-dire choisi à la conception pour obtenir dans la zone de la rampe 62 qu'il alimente un débit d'air souhaité qui est conditionné par la thermique de l'aube dans cette région.

La paroi de l'aube 11 délimitant le bord d'attaque 17 comporte des trous non représentés, par lesquels l'air ayant circulé dans la rampe amont de refroidissement 62 traverse cette paroi pour refroidir le bord d'attaque 17. Le refroidissement du bord d'attaque 17 s'effectue en partie par impact sur le bord d'attaque 17 de l'air de refroidissement provenant de la rampe amont 62.

Les fentes de refroidissement 23 du bord de fuite, y compris celles situées dans la région du sommet S, sont approvisionnées en air de refroidissement, de façon isolée de l'approvisionnement en air du bord d'attaque 17 ou du sommet S. Une rampe aval de refroidissement 66 s'étend depuis le pied P, où elle est alimentée directement via ce pied P, jusqu'à la région du sommet S. La rampe aval 66 alimente en air de refroidissement les fentes 23 du bord de fuite 18. La rampe aval 66 est séparée de la région de jonction 72, et de manière plus générale des cavités latérales 54, 56, par une paroi transversale 74 s'étendant sensiblement selon la direction d'envergure EV et dans une direction orthogonale à cette direction et à la direction longitudinale AX de l'aube 11. Etant donné que le conduit central 53 est séparé des cavités latérales 54, 56, la paroi transversale 74 est dépourvue de contact mécanique direct avec la paroi 58 délimitant le conduit central 53.

Dans une variante de réalisation non représentée de la figure 3, et de manière similaire à l'alimentation en air de refroidissement du bord d'attaque 17, les fentes de refroidissement 23 du bord de fuite peuvent être alimentés en air de refroidissement de manière calibrée par la rampe aval 66. Des trous traversant les parois de l'aube et débouchant dans les cavités latérales internes formant écran thermique peuvent être prévus pour établir une circulation d'air optimale dans ces cavités. Chacun de ces trous est avantageusement situé au niveau d'une zone de dépression pour favoriser la circulation d'air. Chacun de ces trous assure que l'air collecté en pied d'aube et qui est acheminé dans une cavité formant écran thermique, est aspiré hors de l'aube, après avoir cheminé dans cette cavité.

## Revendications

1. Aube (11) de turbine d'une turbomachine telle qu'un turbopropulseur ou un turboréacteur, l'aube (11) comprenant :
un pied (P),
une pale (12) portée par le pied (P) et comprenant une base (16) par laquelle elle est raccordée au pied (P), la pale (12) s'étendant selon une direction d'envergure (EV) en se terminant par un sommet (S), la pale (12) comprenant un bord d'attaque (17) et un bord de fuite (18) situé en aval du bord d'attaque (17), la pale (12) comprenant une paroi d'intrados (21) et une paroi d'extrados espacées l'une de l'autre et reliant le bord d'attaque (17) au bord de fuite (18),
une première cavité latérale interne (54) longeant la paroi d'intrados (21) et une seconde cavité latérale interne (56) longeant la paroi d'extrados,
au moins un conduit central interne (53) s'étendant entre les cavités latérales (54, 56) et configuré pour collecter au niveau du pied (P) et à travers le pied (P) de l'air de refroidissement pour le faire circuler dans la pale (12),
dans laquelle les cavités latérales (54, 56) entourent le conduit central interne (53) au moins dans la partie arrière du conduit central interne (53) et communiquent entre elles, en étant réunies par une région de jonction (72) située en aval du conduit central interne (53) et qui s'étend sur la majorité de la hauteur (78) du conduit central interne (53) selon la direction d'envergure (EV),
**caractérisé en ce que** :
dans laquelle le conduit central interne (53) est séparé physiquement des cavités latérales (54, 56), par une paroi (58), le conduit central interne (53) étant alimenté en air de refroidissement séparément des cavités latérales (54, 56) et les cavités latérales (54, 56) étant alimentées en air de refroidissement par au moins un canal débouchant dans le pied (P),
les deux cavités latérales (54, 56) formant avec la région de jonction (72) une cavité unique enveloppant le conduit central interne (53) sur la majorité de la surface externe de la paroi (58) du conduit central interne (53) et isolant thermiquement le conduit central interne (53) des parois d'intrados (21) et d'extrados,
le bord d'attaque (17) et le somment (S) étant alimentés en air de refroidissement par le conduit central interne (53) qui s'étend depuis le pied (P) jusqu'au sommet (S), le bord d'attaque (17) étant refroidi par une rampe amont de refroidissement (62) qui s'étend depuis la base (16) de la pale (12) jusqu'au somment (S), le conduit central interne (53) étant relié à la rampe amont (62) par des passages (64) régulièrement espacés le long de la direction d'envergure (EV) pour assurer une alimentation calibrée, l'air refroidissant la région du bord d'attaque (17) étant évacué par des trous traversants (22) formés dans la paroi d'intrados (21),
le bord de fuite (18) comporte une série de fentes de refroidissement (23) traversant la paroi d'intrados (21),
une rampe aval (66) alimentant en air de refroidissement les fentes (23) du bord de fuite (18), la rampe aval (66) étant séparée de la région de jonction (72) par une paroi transversale (74) s'étendant selon la direction d'envergure (EV) et dans une direction orthogonale à cette direction et à une direction longitudinale (AX) de l'aube, la paroi transversale (74) étant dépourvue de contact mécanique direct avec la paroi (58) délimitant le conduit central interne (53).

2. Aube (11) selon la revendication précédente, dans laquelle la région de jonction (72) s'étend sur toute la hauteur d'au moins l'une de la première et de la deuxième cavité latérale (54, 56) selon la direction d'envergure (EV).

3. Aube (11) selon l'une quelconque des revendications précédentes, dans laquelle la région de jonction (72) présente, selon au moins un plan de section orthogonal à la direction d'envergure (EV), une forme de U ouvert vers l'amont.

4. Aube (11) selon la revendication précédente, dans laquelle le faîte du U présente une épaisseur (76) sensiblement constante selon une direction longitudinale (AX) d'élongation de la pale (12) du bord d'attaque (17) au bord de fuite (18).

5. Aube (11) selon l'une quelconque des revendications précédentes, dans laquelle le conduit central (53) a des surfaces internes lisses et les cavités latérales (54, 56) comprennent des promoteurs de turbulence et/ou des déflecteurs destinés à accroitre les échanges thermiques à l'intérieur de l'aube (11).

6. Aube (11) selon l'une quelconque des revendications précédentes, dans laquelle l'aube (11) comprend plusieurs cavités latérales internes distinctes longeant l'intrados et/ou plusieurs cavités latérales distinctes longeant l'extrados.

7. Aube (11) selon l'une quelconque des revendications précédentes, dans laquelle l'aube (11) est une pièce monobloc creuse fabriquée par moulage.

8. Ensemble de moulage configuré pour fabriquer d'une aube (11) selon l'une quelconque des revendications 1 à 7, comprenant au moins une empreinte et un ensemble de noyaux destinés à la formation du conduit central interne (53), des cavités latérales (54, 56), de la rampe amont (62), de la rampe aval (66), des passages (64) et des fentes (23).

9. Turbine (8) de turbomachine comprenant une aube selon l'une quelconque des revendications 1 à 7.

10. Turbomachine comprenant une turbine (8) selon la revendication précédente.

## Patentansprüche

1. Turbinenschaufel (11) einer Turbomaschine wie einem Turbotriebwerk oder einem Turbostrahltriebwerk, wobei die Schaufel (11) Folgendes umfasst:
einen Fuß (P),
ein Blatt (12), das von dem Fuß (P) getragen wird und ein Unterteil (16) aufweist, über welches es mit dem Fuß (P) verbunden ist, wobei sich das Blatt (12) in eine Spannweitenrichtung (EV) erstreckt und in einem Scheitelpunkt endet, wobei das Blatt (12) eine Vorderkante (17) und eine stromabwärts der Vorderkante (17) gelegene Hinterkante (18) aufweist, wobei das Blatt (12) eine druckseitige Wand (21) und eine saugseitige Wand aufweist, die voneinander beabstandet sind und die Vorderkante (17) mit der Hinterkante (18) verbinden,
einen ersten seitlichen Innenhohlraum (54) entlang der druckseitigen Wand (21) und einen zweiten seitlichen Innenhohlraum (56) entlang der saugseitigen Wand,
mindestens einen inneren zentralen Kanal (53), der sich zwischen den seitlichen Hohlräumen (54, 56) erstreckt und dazu ausgeführt ist, auf der Höhe des Fußes (P) und durch den Fuß (P) hindurch Kühlluft zu sammeln und diese in dem Blatt (12) zirkulieren zu lassen,
wobei die seitlichen Hohlräume (54, 56) den inneren zentralen Kanal (53) zumindest im hinteren Teil des inneren zentralen Kanals (53) umgeben und untereinander in Verbindung stehen, indem sie über einen stromabwärts des inneren zentralen Kanals (53) gelegenen Verbindungsbereich (72) vereint sind, der sich über den Großteil der Höhe (78) des inneren zentralen Kanals (53) in der Spannweitenrichtung (EV) erstreckt,
**dadurch gekennzeichnet, dass**:
der innere zentrale Kanal (53) physisch von den seitlichen Hohlräumen (54, 56) durch eine Wand (58) getrennt ist, wobei der innere zentrale Kanal (53) getrennt von den seitlichen Hohlräumen (54, 56) mit Kühlluft versorgt wird und die seitlichen Hohlräume (54, 56) durch mindestens einen in den Fuß (P) mündenden Kanal mit Kühlluft versorgt werden,
wobei die zwei seitlichen Hohlräume (54, 56) mit dem Verbindungsbereich (72) einen einzigen Hohlraum bilden, der den inneren zentralen Kanal (53) über den Hauptteil der Außenfläche der Wand (58) des inneren zentralen Kanals (53) umschließt und den inneren zentralen Kanal (53) gegenüber der druckseitigen (21) und der saugseitigen Wand thermisch isoliert,
wobei die Vorderkante (17) und der Scheitelpunkt (S) durch den inneren zentralen Kanal (53), der sich vom Fuß (P) bis zum Scheitelpunkt (S) erstreckt, mit Kühlluft versorgt werden, wobei die Vorderkante (17) durch eine stromaufwärtige Kühlrampe (62) gekühlt wird, die sich von dem Unterteil (16) des Blatts (12) bis zum Scheitelpunkt (S) erstreckt, wobei der innere zentrale Kanal (53) mit der stromaufwärtigen Rampe (62) über Durchlässe (64) verbunden ist, welche gleichmäßig entlang der Spannweitenrichtung (EV) beabstandet sind, um eine kalibrierte Versorgung sicherzustellen, wobei die den Bereich der Vorderkante (17) kühlende Luft durch in der druckseitigen Wand (21) ausgebildete Durchgangsbohrungen (22) abgeführt wird,
wobei die Hinterkante (18) eine Reihe von Kühlschlitzen (23) aufweist, die durch die druckseitige Wand (21) hindurchgehen,
wobei eine stromabwärtige Rampe (66) die Schlitze (23) der Hinterkante (18) mit Kühlluft versorgt, wobei die stromabwärtige Rampe (66) von dem Verbindungsbereich (72) durch eine Querwand (74) getrennt ist, welche sich in der Spannweitenrichtung (EV) sowie in einer zu dieser Richtung und zu einer Längsrichtung (AX) der Schaufel orthogonalen Richtung erstreckt, wobei die Querwand (74) keinen unmittelbaren mechanischen Kontakt mit der den inneren zentralen Kanal (53) abgrenzenden Wand (58) hat.

2. Schaufel (11) nach dem vorhergehenden Anspruch, wobei sich der Verbindungsbereich (72) über die gesamte Höhe von mindestens einem des ersten und zweiten seitlichen Hohlraums (54, 56) in der Spannweitenrichtung (EV) erstreckt.

3. Schaufel (11) nach einem der vorhergehenden Ansprüche, wobei der Verbindungsbereich (72) in mindestens einer zur Spannweitenrichtung (EV) orthogonalen Querschnittsebene eine stromaufwärts offene U-Form aufweist.

4. Schaufel (11) nach dem vorhergehenden Anspruch, wobei der höchste Punkt des U eine im Wesentlichen konstante Dicke (76) in einer Längsrichtung (AX) der Dehnung des Blatts (12) von der Vorderkante (17) zur Hinterkante (18) aufweist.

5. Schaufel (11) nach einem der vorhergehenden Ansprüche, wobei der zentrale Kanal (53) glatte Innenflächen hat und die seitlichen Hohlräume (54, 56) Turbulenzbeschleuniger und/oder Ablenkvorrichtungen zur Erhöhung des Wärmeaustauschs mit dem Inneren der Schaufel (11) aufweisen.

6. Schaufel (11) nach einem der vorhergehenden Ansprüche, wobei die Schaufel (11) mehrere getrennte innere Seitenhohlräume, die entlang der Druckseite verlaufen, und/oder mehrere getrennte Seitenhohlräume umfasst, die entlang der Saugseite verlaufen.

7. Schaufel (11) nach einem der vorhergehenden Ansprüche, wobei die Schaufel (11) ein durch Formen gefertigtes, hohles einstückiges Teil ist.

8. Formeinrichtung, die zum Fertigen einer Schaufel (11) nach einem der Ansprüche 1 bis 7 ausgeführt ist, mit mindestens einer Vertiefung und einer Anordnung von Kernen zur Ausbildung des inneren zentralen Kanals (53), der seitlichen Hohlräume (54, 56), der stromaufwärtigen Rampe (62), der stromabwärtigen Rampe (66), der Durchlässe (64) sowie der Schlitze (23).

9. Turbine (8) der Turbomaschine mit einer Schaufel nach einem der Ansprüche 1 bis 7.

10. Turbomaschine mit einer Turbine (8) nach dem vorhergehenden Anspruch.

## Claims

1. Turbine blade (11) of a turbomachine such as a turboprop engine or a turbojet engine, the blade (11) comprising:
a root (P),
a vane (12) carried by the root (P) and comprising a base (16) by means of which it is connected to the root (P), the vane (12) extending in a span direction (EV) while terminating in an apex (S), the vane (12) comprising a leading edge (17) and a trailing edge (18) located downstream of the leading edge (17), the vane (12) comprising a pressure wall (21) and a suction wall spaced apart from each other and connecting the leading edge (17) to the trailing edge (18),
a first internal lateral cavity (54) running along the pressure wall (21) and a second internal lateral cavity (56) running along the suction wall,
at least one internal central conduit (53) extending between the lateral cavities (54, 56) and configured for collecting, at the root (P) and through the root (P), cooling air to cause it to circulate in the vane (12),
wherein the lateral cavities (54, 56) surround the internal central conduit (53) at least in the rear part of the internal central conduit (53) and communicate with each other, while being joined by a junction region (72) located downstream of the internal central conduit (53) and which extends over the majority of the height (78) of the internal central conduit (53) in the span direction (EV),
**characterised in that**:
wherein the internal central conduit (53) is physically separated from the lateral cavities (54, 56) by a wall (58), the internal central conduit (53) being supplied with cooling air separately from the lateral cavities (54, 56) and the lateral cavities (54, 56) being supplied with cooling air by at least one channel emerging in the root (P),
the two lateral cavities (54, 56) forming with the junction region (72) a single cavity enveloping the internal central conduit (53) over the majority of the external surface of the wall (58) of the internal central conduit (53) and thermally insulating the internal central conduit (53) from the pressure (21) and suction walls,
the leading edge (17) and the apex (S) being supplied with cooling air by the internal central conduit (53), which extends from the root (P) as far as the apex (S), the leading edge (17) being cooled by an upstream cooling pipe (62) that extends from the base (16) of the vane (12) as far as the apex (S), the internal central conduit (53) being connected to the upstream pipe (62) by passages (64) regularly spaced along the span direction (EV) to provide a calibrated supply, the air cooling the region of the leading edge (17) being discharged through through-holes (22) formed in the pressure wall (21),
the trailing edge (18) includes a series of cooling slots (23) passing through the pressure wall (21),
a downstream pipe (66) supplying cooling air to the slots (23) of the trailing edge (18), the downstream pipe (66) being separated from the junction region (72) by a transverse wall (74) extending in the span direction (EV) and in a direction orthogonal to this direction and to a longitudinal direction (AX) of the blade, the transverse wall (74) having no direct mechanical contact with the wall (58) delimiting the internal central conduit (53).

2. Blade (11) according to the preceding claim, wherein the junction region (72) extends over the entire height of at least one of the first and second lateral cavities (54, 56) in the span direction (EV).

3. Blade (11) according to either one of the preceding claims, wherein the junction region (72) has, in at least one cross-sectional plane orthogonal to the span direction (EV), a U shape open towards the upstream end.

4. Blade (11) according to the preceding claim, wherein the top of the U has a substantially constant thickness (76) in a longitudinal direction (AX) of elongation of the vane (12) from the leading edge (17) to the trailing edge (18).

5. Blade (11) according to any one of the preceding claims, wherein the central conduit (53) has smooth internal surfaces and the lateral cavities (54, 56) comprise turbulence promoters and/or deflectors intended to increase the thermal exchanges inside the blade (11).

6. Blade (11) according to any one of the preceding claims, wherein the blade (11) comprises a plurality of distinct internal lateral cavities running along the pressure face and/or a plurality of distinct lateral cavities running along the suction face.

7. Blade (11) according to any one of the preceding claims, wherein the blade (11) is in a hollow single-piece part manufactured by moulding.

8. Moulding assembly configured for manufacturing a blade (11) according to any one of claims 1 to 7, comprising at least one cavity and a set of cores intended for forming the internal central conduit (53), lateral cavities (54, 56), the upstream pipe (62), the downstream pipe (66), the passages (64) and the slots (23).

9. Turbomachine turbine (8) comprising a blade according to any one of claims 1 to 7.

10. Turbomachine comprising a turbine (11) according to the preceding claim.
